# EUROPEAN PATENT APPLICATION

(11) **EP 4 656 411 A1**
(43) Date of publication of application: **03.12.2025**
(21) Application number: 23918504.4
(22) Date of filing: 11.10.2023
(51) Int. Cl.: B60C 11/00

(54) **TIRE FOR PASSENGER CAR**

(30) Priority: 27.01.2023 JP 2023011339
(71) Applicant: BRIDGESTONE CORPORATION, Chuo-ku Tokyo 104-8340 (JP)
(72) Inventor: USHIODA, Ryota, Tokyo 104-8340 (JP)
(74) Representative: Marks & Clerk LLP
(86) International application number: PCT/JP2023/036924
(87) International publication number: WO 2024/157549

(57) **Abstract**

A passenger vehicle tire in which tread rubber T07 is composed of cap rubber T07C and base rubber T07B. The cap rubber is positioned on the tire radial direction outer side with respect to the base rubber and is also positioned on both tire width direction outer sides with respect to the base rubber. The base rubber is composed entirely of rubber having the same composition. The tire width direction width of the base rubber is shorter than the tire width direction width of the cap rubber. The storage modulus E' of the base rubber is at least 2.0 times the storage modulus E' of the cap rubber.

## Description

### TECHNICAL FIELD

The present disclosure relates to a passenger vehicle tire.

The present application claims priority based on Japanese Patent Application No. 2023-011339 filed in Japan on January 27, 2023, the entire contents of which are incorporated herein by reference.

### BACKGROUND

Conventionally, there are passenger vehicle tires in which tread rubber is composed of cap rubber and base rubber (for example, PTL 1).

### CITATION LIST

### Patent Literatures

PTL 1: JP 2016-159893 A

### SUMMARY

### (Technical Problem)

However, in conventional passenger vehicle tires, there has been room for improvement in terms of wear resistance performance.

The present disclosure aims to provide a passenger vehicle tire capable of improving wear resistance performance.

### (Solution to Problem)

[1] A passenger vehicle tire comprising:
   tread rubber composed of cap rubber and base rubber,
   wherein the cap rubber is positioned on the tire radial direction outer side with respect to the base rubber and is also positioned on both tire width direction outer sides with respect to the base rubber,
   the base rubber is composed entirely of rubber having the same composition,
   the tire width direction width of the base rubber is shorter than the tire width direction width of the cap rubber,
   and the storage modulus E' of the base rubber is at least 2.0 times the storage modulus E' of the cap rubber.

### (Advantageous Effect)

According to the present disclosure, it is possible to provide a passenger vehicle tire capable of improving wear resistance performance.

### BRIEF DESCRIPTION OF THE DRAWINGS

In the accompanying drawings:
FIG. 1 is a schematic diagram for explaining the configuration of tread rubber of a passenger vehicle tire according to one embodiment of the present disclosure.
FIG. 2 is a drawing for explaining an example of an internal tire structure applicable to a passenger vehicle tire according to an optional embodiment of the present disclosure, and is a schematic tire width direction cross-sectional view illustrating a half portion of the tire in a cross-section in the tire width direction.
FIG. 3A and FIG. 3B are diagrams for explaining analysis results.
FIG. 4 is a schematic diagram illustrating the configuration of tread rubber of a passenger vehicle tire according to Comparative Example 1.

The passenger vehicle tire according to the present disclosure can be suitably used for any passenger vehicle pneumatic tire.

Hereinafter, embodiments of the passenger vehicle tire according to the present disclosure will be illustratively described with reference to the drawings. In this specification, the passenger vehicle tire is also simply referred to as "tire." In each drawing, the same reference numerals are assigned to common members and portions.

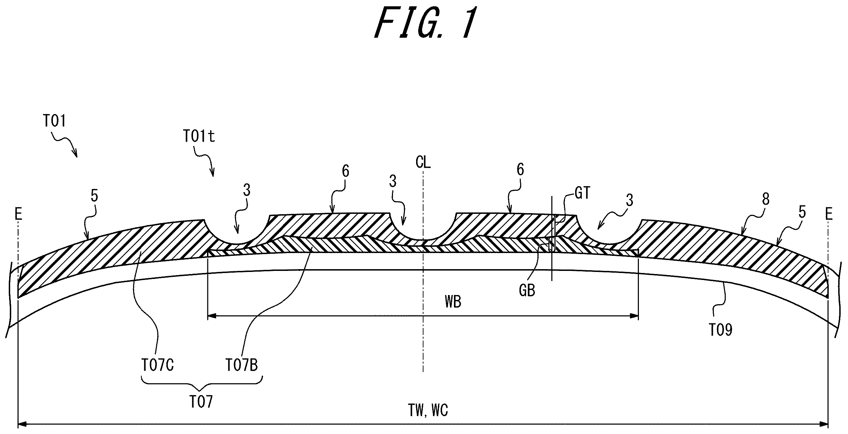

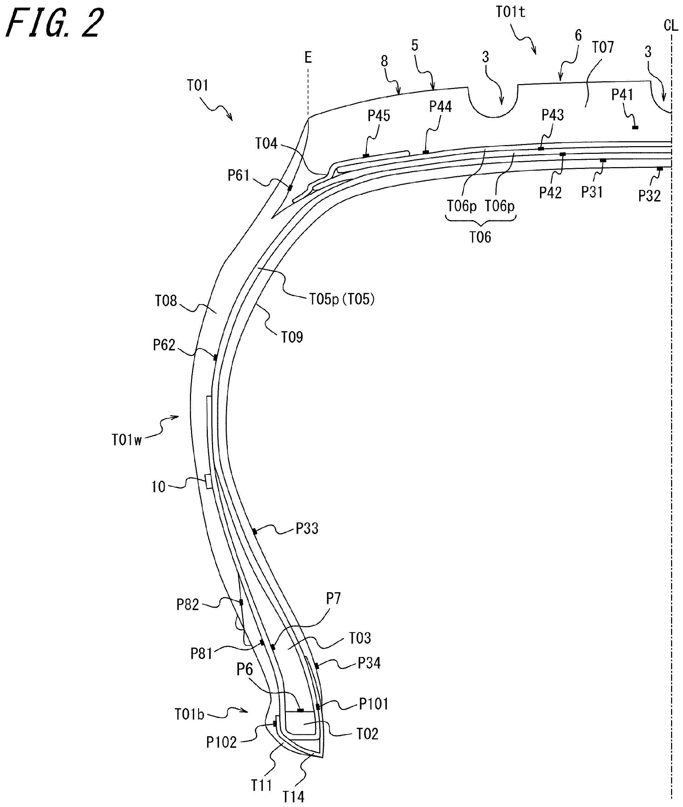

FIG. 1 is a schematic diagram for explaining the configuration of tread rubber T07 of the passenger vehicle tire T01 according to one embodiment of the present disclosure. FIG. 2 is a drawing for explaining an example of an internal tire structure that can be applied to the tire T01 according to any embodiment of the present disclosure, and is a schematic tire width direction cross-sectional view illustrating a tire half portion (the portion on one side with respect to the tire equatorial plane CL) of the tire T01 by a cross section in the tire width direction. The tire T01 of the embodiment in FIG. 1 is configured as a passenger vehicle tire (more specifically, a passenger vehicle pneumatic tire).

As illustrated in FIG. 2, the tire T01 of each embodiment of the present disclosure includes a tread portion T01t, a pair of sidewall portions T01w extending radially inward from both ends in the tire width direction of the tread portion T01t, and a pair of bead portions T01b provided at the radially inner ends of the respective sidewall portions T01w. The bead portion T01b is configured to contact the rim at the radially inner side and the widthwise outer side of the tire when the tire T01 is mounted on the rim. In the tread portion T01t, the tread rubber T07 is positioned on the radially outer side of the belt T06. The tread rubber T07 constitutes the tread surface 8, which is the radially outer surface of the tread portion T01t. A tread pattern is formed on the tread surface 8. Any tread pattern may be provided on the tread surface 8.

In this specification, "tread surface (8)" means the outer circumferential surface of the tire over the entire circumference that comes into contact with the road surface when the tire, assembled to the approved rim and filled with normal internal pressure, is rolled under a state where the maximum load is applied. In this specification, "ground contact edge (E)" means the end in the tire width direction of the tread surface (8). In this specification, "ground contact width (TW)" means the tire widthwise distance between the pair of ground contact edges (E) of the tread surface (8). Here, "approved rim" refers to the standard rim for the applicable size described or to be described in the future in the industrial standard effective in the region where the tire is produced and used, such as the JATMA YEAR BOOK of the Japan Automobile Tyre Manufacturers Association (JATMA) in Japan, the STANDARDS MANUAL of the European Tyre and Rim Technical Organisation (ETRTO) in Europe, and the YEAR BOOK of The Tire and Rim Association, Inc. (TRA) in the United States (that is, the above "approved rim" includes, in addition to current sizes, sizes that may be included in the above industrial standards in the future. As an example of "sizes to be described in the future," sizes described as "FUTURE DEVELOPMENTS" in the 2013 edition of the ETRTO STANDARDS MANUAL can be cited). In the case of sizes not described in the above industrial standards, it refers to a rim having a width corresponding to the bead width of the tire. Also, "normal internal pressure" refers to the air pressure (maximum air pressure) corresponding to the maximum load capability for the applicable size and ply rating described in the above JATMA YEAR BOOK, etc., and in the case of sizes not described in the above industrial standards, it refers to the air pressure (maximum air pressure) corresponding to the maximum load capability specified for each vehicle on which the tire is mounted. "Maximum load" refers to the load corresponding to the above maximum load capability. Note that the air referred to here may also be replaced with an inert gas such as nitrogen gas or the like.

In this specification, unless otherwise specified, the dimensions of each element such as grooves and land portions are to be measured in a state where the tire is assembled to the approved rim, filled with normal internal pressure, and is unloaded. Here, the dimensions of each element such as grooves and land portions on the tread surface are to be measured in a developed view of the tread surface. In this specification, "developed view of the tread surface" refers to a planar view of the tread surface in a state where the tread surface is developed on a plane.

Hereinafter, the configuration of the tread rubber T07 in the tire T01 of the present embodiment will be described with reference to FIG. 1. Note that, for convenience, in FIG. 1, illustration of components other than the tread rubber T07 in the internal structure of the tire T01 is omitted. As illustrated in FIG. 1, in the present embodiment, the tread rubber T07 is composed of cap rubber T07C and base rubber T07B. The cap rubber T07C is positioned on the radially outer side with respect to the base rubber T07B, and is also positioned on both widthwise outer sides with respect to the base rubber T07B. The cap rubber T07C extends over the entire tire width direction region between the pair of ground contact edges E. The base rubber T07B is positioned on the tire equatorial plane CL. On the tire equatorial plane CL, the cap rubber T07C is positioned on the radially outer side with respect to the base rubber T07B. In the widthwise outer sides of the base rubber T07B, the tread rubber T07 is composed only of the cap rubber T07C. The base rubber T07B is composed entirely of rubber having the same composition throughout. It is preferable that the cap rubber T07C is also composed entirely of rubber having the same composition throughout. The base rubber T07B may be composed of a single rubber member as in the example in the drawing. The cap rubber T07C may also be composed of a single rubber member as in the example in the drawing. The tire width direction width WB of the base rubber T07B is shorter than the tire width direction width WC of the cap rubber T07C. The storage modulus E' of the base rubber T07B is at least 2.0 times the storage modulus E' of the cap rubber T07C. In this specification, "storage modulus (E')" is measured using a viscoelasticity meter at room temperature 25°C, frequency 52 Hz, initial strain rate 2%, and dynamic strain rate 2%. The value of the storage modulus E' can be increased, for example, by increasing the content of carbon black in the rubber.

Here, the effects of the tire T01 of the present embodiment will be described. Generally, in passenger vehicle tires, the tire axial force distribution in actual vehicles is mainly composed of a large proportion of free-rolling components, so reducing wear energy during free rolling is effective for improving wear resistance performance. Generally, due to the structure of the tire, the outer surface has curvature in the tire width direction cross section, so there are differences in the rotation radius depending on the position in the tire width direction. Due to this, mainly in the shoulder side portions (widthwise outer portions), a braking force component is applied and slippage occurs on the road surface during traction initiation, making wear energy likely to be generated. Therefore, in the present embodiment, as described above, the cap rubber T07C is positioned on the radially outer side with respect to the base rubber T07B, and is also positioned on both widthwise outer sides with respect to the base rubber T07B. The base rubber T07B is composed entirely of rubber having the same composition throughout, the tire width direction width WB of the base rubber T07B is shorter than the tire width direction width WC of the cap rubber T07C, and the storage modulus E' of the base rubber T07B is at least 2.0 times the storage modulus E' of the cap rubber T07C. That is, roughly speaking, the relatively hard base rubber T07B is disposed only in the center side portion (widthwise inner portion) of the tire. As a result, during traction initiation, a braking force component is applied in the center side portion, and a driving force component is applied in the shoulder side portion, making it possible to offset the wear energy of each portion during free rolling. By making the storage modulus E' of the base rubber T07B relatively high, the shearing deformation of the base rubber T07B during traction initiation becomes small, while the overall deformation of the tread rubber T07 remains substantially constant, so the shearing deformation of the cap rubber T07C becomes large. The shearing force due to the relative displacement between the belt T06 and the tread rubber T07 on the traction side is directed in the braking direction, and by making the base rubber T07B harder, the shearing deformation of the cap rubber T07C becomes even larger, so the braking force component in the center side portion increases. This braking force offsets the driving force generated during traction initiation, making it possible to reduce the wear energy during free rolling. Furthermore, since the shearing deformation of the base rubber T07B is suppressed, the actual rotation radius becomes smaller, so the difference in rotation radius between the shoulder side portion and the center side portion is reduced, and braking in the shoulder side portion during traction initiation can be suppressed. As a result, the wear energy in the shoulder side portion can also be offset. In this way, the wear resistance performance can be improved.

It is preferable that the storage modulus E' of the base rubber T07B is not more than 2.5 times the storage modulus E' of the cap rubber T07C. That is, it is preferable that the storage modulus E' of the base rubber T07B is 2.0 to 2.5 times the storage modulus E' of the cap rubber T07C. This makes it possible to further improve the wear resistance performance.

It is preferable that the tire width direction width WB of the base rubber T07B is at least 40% of the ground contact width TW, and more preferably at least 50% of the ground contact width TW. This makes it possible to further improve the wear resistance performance. It is preferable that the tire width direction width WB of the base rubber T07B is not more than 70% of the ground contact width TW, and more preferably not more than 60% of the ground contact width TW. This makes it possible to further improve the wear resistance performance.

It is preferable that the tire width direction width WC of the cap rubber T07C is at least 100% of the ground contact width TW.

As in the example illustrated in FIG. 1, the tread surface 8 may be provided with a plurality (three in the example of FIG. 1) of main grooves 3 and one or more (two in the example of FIG. 1) center land portions 6. Each main groove 3 extends in the tire circumferential direction. The one or more (two in the example of FIG. 1) center land portions 6 are partitioned between the plurality (three in the example of FIG. 1) of main grooves 3. Between the pair of main grooves 3 located at the outermost positions in the tire width direction among the plurality (three in the example of FIG. 1) of main grooves 3 and the pair of ground contact edges E, a pair of shoulder land portions 5 are partitioned. In the tire width direction region corresponding to each center land portion 6 located within the tire width direction region corresponding to the base rubber T07B, it is preferable that the average value of the ratio of the gauge GB of the base rubber T07B to the gauge GT of the tread rubber T07 is at least 20%, and more preferably at least 30%. This makes it possible to further improve the wear resistance performance. In the tire width direction region corresponding to each center land portion 6 located within the tire width direction region corresponding to the base rubber T07B, it is preferable that the average value of the ratio of the gauge GB of the base rubber T07B to the gauge GT of the tread rubber T07 is not more than 50%, and more preferably not more than 40%. This makes it possible to further improve the wear resistance performance.

In the example of FIG. 1, the base rubber T07B extends over all the center land portions 6; in other words, in the tire width direction region corresponding to the base rubber T07B, the entirety of the tire width direction region of each of the center land portions 6 is located. In the example of FIG. 1, the base rubber T07B is not located in the pair of shoulder land portions 5; in other words, the tire width direction region corresponding to the base rubber T07B is located only on the widthwise inner side with respect to the tire width direction region of each of the pair of shoulder land portions 5. However, these configurations are not essential.

As in the example of FIG. 1, it is preferable that the tire width direction center of the base rubber T07B is located on the tire equatorial plane CL.

In each example described in this specification, other than the above-described tread rubber T07, the tire T01 may have any internal structure. Hereinafter, with reference to FIG. 2, an example of the internal structure of the tire T01 other than the tread rubber T07 will be described.

In the example illustrated in FIG. 2, the tire T01 includes a pair of bead cores T02, a pair of bead fillers T03, a carcass T05, a belt T06, tread rubber T07, side rubber T08, and an inner liner T09.

Each bead core T02 is embedded in the corresponding bead portion T01b. The bead core T02 includes a plurality of bead wires covered with rubber. The bead wire may be made of metal (for example, steel), or may be made of organic fibers such as polyester, nylon, rayon, or aramid. The bead wire can be formed, for example, of monofilament or stranded wire.

Each bead filler T03 is positioned radially outward with respect to the corresponding bead core T02. The bead filler T03 extends in a tapered shape toward the radially outer side of the tire. The bead filler T03 is composed of rubber.

The carcass T05 extends between the pair of bead cores T02 and extends in a toroidal shape. The carcass T05 is composed of one or more (one in the example of FIG. 1) carcass plies T05p. Each carcass ply T05p includes one or more carcass cords and coating rubber covering the carcass cords. The carcass cord can be formed of monofilament or stranded wire. The carcass cord may be made of metal (for example, steel), or may be made of organic fibers such as polyester, nylon, rayon, or aramid. The carcass T05 is preferably of a radial structure, but may also be of a bias structure.

The belt T06 is disposed on the radially outer side of the crown portion of the carcass T05. The belt T06 includes one or more (two in the example of FIG. 1) belt plies T06p. Each belt ply T06p includes one or more belt cords and coating rubber covering the belt cords. The belt cord can be formed of monofilament or stranded wire. The belt cord may be made of metal (for example, steel), or may be made of organic fibers such as polyester, nylon, rayon, or aramid.

The side rubber T08 is located in the sidewall portion T01w. The side rubber T08 constitutes the outer surface on the widthwise outer side of the sidewall portion T01w. The side rubber T08 is located on the widthwise outer side with respect to the carcass T05. The side rubber T08 is located on the widthwise outer side with respect to the bead filler T03. The side rubber T08 is formed integrally with the tread rubber T07.

The inner liner T09 is disposed on the inner side of the carcass T05, and may, for example, be laminated on the inner side of the carcass T05. The inner liner T09 is composed, for example, of butyl-based rubber having low air permeability. The butyl-based rubber includes, for example, butyl rubber and halogenated butyl rubber, which is a derivative thereof. The inner liner T09 is not limited to butyl-based rubber, and may be composed of other rubber compositions, resins, or elastomers.

Although not illustrated, the tire T01 may or may not include cushion rubber between the carcass T05 and the tread rubber T07 in the tire radial direction. The cushion rubber may be located in the vicinity of the widthwise end of the belt T06.

As illustrated in FIG. 2, the tire T01 may include a rubber chafer T11 in the portion configured to contact the rim in each bead portion T01b.

As illustrated in FIG. 2, the tire T01 may include one or more (one in the example of FIG. 2) wire chafers T14 around each bead core T02. As in the example of FIG. 2, the wire chafer T14 may be disposed on the side opposite to the bead core T02 with respect to the carcass T05. The wire chafer T14 is made of metal (for example, steel). Although not illustrated, the tire T01 may include one or more nylon chafers around each bead core T02. As in the example of FIG. 1, the nylon chafer may be disposed on the side opposite to the bead core T02 with respect to the carcass T05. The nylon chafer is made of nylon.

Although not illustrated, the tire T01 may include a hat rubber between the bead filler T03 and the side rubber T08 in the tire width direction in each tire half portion.

As illustrated in FIG. 2, the tire T01 may be provided with an RF tag 10 as a communication device. The RF tag 10 includes an IC chip and an antenna. The RF tag 10 may, for example, be disposed sandwiched between a plurality of members, either of the same or different types, constituting the tire T01. By doing so, it becomes easier to attach the RF tag 10 during production of the tire T01, thereby improving the productivity of the tire T01 equipped with the RF tag 10. As in the example of FIG. 2, the RF tag 10 may, for example, be disposed sandwiched between the bead filler T03 and another member adjacent to the bead filler T03.

The RF tag 10 may also be embedded within any member constituting the tire T01. By doing so, compared to the case where it is disposed sandwiched between a plurality of members constituting the tire T01, the load applied to the RF tag 10 can be reduced. As a result, the durability of the RF tag 10 can be improved. In this example, the RF tag 10 may, for example, be embedded within a rubber member such as the tread rubber T07 or the side rubber T08.

It is preferable that the RF tag 10 is not disposed at a position that serves as a boundary between members having different rigidity in the peripheral length direction, which is the direction along the outer surface of the tire in a cross-sectional view in the tire width direction. By doing so, the RF tag 10 is not disposed at a position where strain is likely to concentrate due to a rigidity step. Therefore, the load applied to the RF tag 10 can be reduced. As a result, the durability of the RF tag 10 can be improved. In this example, it is preferable that the RF tag 10 is not disposed at a position that serves as a boundary between the end of the carcass T05 and a member (such as the side rubber T08) adjacent to the end of the carcass T05 in a cross-sectional view in the tire width direction.

The number of RF tags 10 is not particularly limited. The tire T01 may be provided with only one RF tag 10, or may be provided with two or more RF tags 10. Here, the RF tag 10 is described as an example of a communication device, but a communication device different from the RF tag 10 may also be used.

The RF tag 10 may, for example, be disposed in the tread portion T01t of the tire T01. By doing so, the RF tag 10 is not damaged by a side cut of the tire T01.

The RF tag 10 may, for example, be disposed in the tread center portion in the tire width direction. The tread center portion is a position in the tread portion T01t where flexure is less likely to concentrate. By doing so, the load applied to the RF tag 10 can be reduced. As a result, the durability of the RF tag 10 can be improved. Furthermore, it is possible to suppress the occurrence of differences in communication with the RF tag 10 from both outer sides of the tire T01 in the tire width direction. In this example, the RF tag 10 may, for example, be disposed within a range of 1/2 of the tread width centered on the tire equatorial plane CL in the tire width direction.

The RF tag 10 may, for example, be disposed at the tread edge in the tire width direction. When the position of the reader that communicates with the RF tag 10 is predetermined, the RF tag 10 may, for example, be disposed at the tread edge on one side closer to the reader. In this example, the RF tag 10 may, for example, be disposed within a range of 1/4 of the tread width, with the tread edge as the outer end, in the tire width direction.

The RF tag 10 may, for example, be disposed on the tire inner cavity side with respect to the carcass T05, which includes one or more carcass plies T05p spanning between the bead portions T01b. By doing so, the RF tag 10 becomes less susceptible to damage from external impacts, side cuts, or nail punctures. As one example, the RF tag 10 may be disposed in close contact with the surface of the carcass T05 on the tire inner cavity side (see point P31 in FIG. 2). As another example, when another member is present on the tire inner cavity side with respect to the carcass T05, the RF tag 10 may, for example, be disposed between the carcass T05 and another member located on the tire inner cavity side with respect to the carcass T05. As an example of another member located on the tire inner cavity side with respect to the carcass T05, the inner liner T09 forming the tire inner surface may be mentioned. As another example, the RF tag 10 may be attached to the tire inner surface facing the tire inner cavity (see point P32 in FIG. 2). By configuring the RF tag 10 to be attached to the tire inner surface, the attachment of the RF tag 10 to the tire T01 and the inspection or replacement of the RF tag 10 can be easily performed. That is, the attachability and maintainability of the RF tag 10 can be improved. Furthermore, by attaching the RF tag 10 to the tire inner surface, it is possible to prevent the RF tag 10 from becoming a nucleus of tire failure, compared to a configuration in which the RF tag 10 is embedded within the tire T01.

In addition, when the carcass T05 is provided with a plurality of carcass plies T05p and there is a position where the plurality of carcass plies T05p are stacked, the RF tag 10 may be disposed between the stacked carcass plies T05p.

The RF tag 10 may, for example, be disposed on the tire radial direction outer side with respect to the belt T06, which includes one or more belt plies T06p, in the tread portion T01t of the tire T01. As one example, the RF tag 10 may be disposed in close contact with the belt T06 on the tire radial direction outer side with respect to the belt T06 (see point P44 in FIG. 2). As another example, when a belt reinforcement layer T04 is provided, the RF tag 10 may be disposed in close contact with the belt reinforcement layer T04 on the tire radial direction outer side with respect to the belt reinforcement layer T04 (see point P45 in FIG. 2). As another example, the RF tag 10 may be embedded within the tread rubber T07 on the tire radial direction outer side with respect to the belt T06 (see point P41 in FIG. 2). By disposing the RF tag 10 on the tire radial direction outer side with respect to the belt T06 in the tread portion T01t of the tire T01, communication with the RF tag 10 from the outside of the tire T01 in the tire radial direction is less likely to be hindered by the belt T06. Therefore, communication with the RF tag 10 from the outside of the tire T01 in the tire radial direction can be improved.

Furthermore, the RF tag 10 may, for example, be disposed on the tire radial direction inner side with respect to the belt T06 in the tread portion T01t of the tire T01. By doing so, the outer side of the RF tag 10 in the tire radial direction is covered by the belt T06, so the RF tag 10 becomes less susceptible to damage from impacts or nail punctures from the tread surface. As one example, the RF tag 10 may be disposed between the belt T06 and the carcass T05 located on the tire radial direction inner side with respect to the belt T06 in the tread portion T01t of the tire T01 (see point P42 in FIG. 2).

Furthermore, when the belt T06 is provided with a plurality of belt plies T06p, the RF tag 10 may be disposed between any two belt plies T06p in the tread portion T01t of the tire T01 (see point P43 in FIG. 2). By doing so, the outer side of the RF tag 10 in the tire radial direction is covered by one or more belt plies T06p, so the RF tag 10 becomes less susceptible to damage from impacts or nail punctures from the tread surface.

The RF tag 10 may, for example, be disposed at a position of the sidewall portion T01w or the bead portion T01b of the tire T01. The RF tag 10 may, for example, be disposed at the sidewall portion T01w or the bead portion T01b on one side closer to a reader capable of communicating with the RF tag 10 (see points P6 and P62 in FIG. 2). By doing so, communication between the RF tag 10 and the reader can be enhanced. As one example, the RF tag 10 may be disposed between the carcass T05 and the side rubber T08, or between the tread rubber T07 and the side rubber T08 (see point P61 in FIG. 2).

The RF tag 10 may, for example, be disposed between the position of the tire maximum width and the position of the tread surface in the tire radial direction. By doing so, compared to a configuration in which the RF tag 10 is disposed on the tire radial direction inner side of the position of the tire maximum width, communication with the RF tag 10 from the outside of the tire T01 in the tire radial direction can be enhanced.

The RF tag 10 may, for example, be disposed on the tire radial direction inner side of the position of the tire maximum width. By doing so, the RF tag 10 is disposed near the bead portion T01b, which has high rigidity. Therefore, the load applied to the RF tag 10 can be reduced. As a result, the durability of the RF tag 10 can be improved. As one example, the RF tag 10 may be disposed at a position adjacent to the bead core T02 in the tire radial direction or the tire width direction. The vicinity of the bead core T02 is a region where strain is less likely to concentrate. Therefore, the load applied to the RF tag 10 can be reduced. As a result, the durability of the RF tag 10 can be improved.

In particular, it is preferable that the RF tag 10 is disposed on the tire radial direction inner side of the position of the tire maximum width and on the tire radial direction outer side of the bead core T02 of the bead portion T01b. By doing so, the durability of the RF tag 10 can be improved, and communication between the RF tag 10 and the reader is less likely to be hindered by the bead core T02, thereby enhancing the communication performance of the RF tag 10.

Furthermore, when the side rubber T08 is composed of a plurality of rubber members of the same or different types that are adjacent in the tire radial direction, the RF tag 10 may be disposed sandwiched between the plurality of rubber members constituting the side rubber T08.

The RF tag 10 may be disposed sandwiched between the bead filler T03 and another member adjacent to the bead filler T03. By doing so, the RF tag 10 can be disposed at a position where strain is less likely to concentrate due to the arrangement of the bead filler T03. Therefore, the load applied to the RF tag 10 can be reduced. As a result, the durability of the RF tag 10 can be improved.

The RF tag 10 may, for example, be disposed sandwiched between the bead filler T03 and the carcass T05. The portion of the carcass T05 that sandwiches the RF tag 10 together with the bead filler T03 may be located on the outer side in the tire width direction with respect to the bead filler T03, or may be located on the inner side in the tire width direction. When the portion of the carcass T05 that sandwiches the RF tag 10 together with the bead filler T03 is located on the outer side in the tire width direction with respect to the bead filler T03, the load applied to the RF tag 10 due to impacts or damage from the outer side of the tire T01 in the tire width direction can be further reduced. As a result, the durability of the RF tag 10 can be further improved.

Furthermore, the bead filler T03 may include a portion disposed adjacent to the side rubber T08. In such a case, the RF tag 10 may be disposed sandwiched between the bead filler T03 and the side rubber T08.

Furthermore, the bead filler T03 may include a portion disposed adjacent to the rubber chafer T11. In such a case, the RF tag 10 may be disposed sandwiched between the bead filler T03 and the rubber chafer T11.

The RF tag 10 may, for example, be disposed sandwiched between the rubber chafer T11 and the side rubber T08 (see point P82 in FIG. 2). By doing so, the RF tag 10 can be disposed at a position where strain is less likely to concentrate due to the arrangement of the rubber chafer T11. Therefore, the load applied to the RF tag 10 can be reduced. As a result, the durability of the RF tag 10 can be improved.

The RF tag 10 may, for example, be disposed sandwiched between the rubber chafer T11 and the carcass T05 (see point P81 in FIG. 2). By doing so, the load applied to the RF tag 10 due to impacts or damage from the rim can be reduced. Therefore, the durability of the RF tag 10 can be improved.

The RF tag 10 may be disposed sandwiched between the wire chafer T14 and another member adjacent to the wire chafer T14 on the inner or outer side in the tire width direction. By doing so, the position of the RF tag 10 becomes less likely to change during tire deformation. Therefore, the load applied to the RF tag 10 during tire deformation can be reduced. As a result, the durability of the RF tag 10 can be improved. As an example of another member adjacent to the wire chafer T14 on the inner or outer side in the tire width direction, a rubber member such as the rubber chafer T11 may be mentioned (see point P102 in FIG. 2). Furthermore, as another member adjacent to the wire chafer T14 on the inner or outer side in the tire width direction, the carcass T05 may also be mentioned (see point P101 in FIG. 2).

A belt reinforcement layer T04 may further be provided on the radially outer side of the belt T06. For example, the belt reinforcement layer T04 may be formed by continuously spirally winding a belt reinforcement layer cord made of polyethylene terephthalate in the tire circumferential direction. Here, the belt reinforcement layer cord may be subjected to adhesive treatment under a tension of at least 6.9×10⁻² N/tex, and may have an elastic modulus at a load of 29.4 N measured at 160°C of at least 2.5 mN/dtex·%. Furthermore, the belt reinforcement layer T04 may be disposed so as to cover the entire belt T06 or only both end portions of the belt T06. Furthermore, the winding density per unit width of the belt reinforcement layer T04 may differ depending on the position in the width direction. By doing so, it is possible to reduce road noise and flat spots without reducing high-speed durability.

### EXAMPLES

The tire T01 according to the examples and comparative examples was evaluated by FEM analysis, as described below.

In the accompanying drawings:

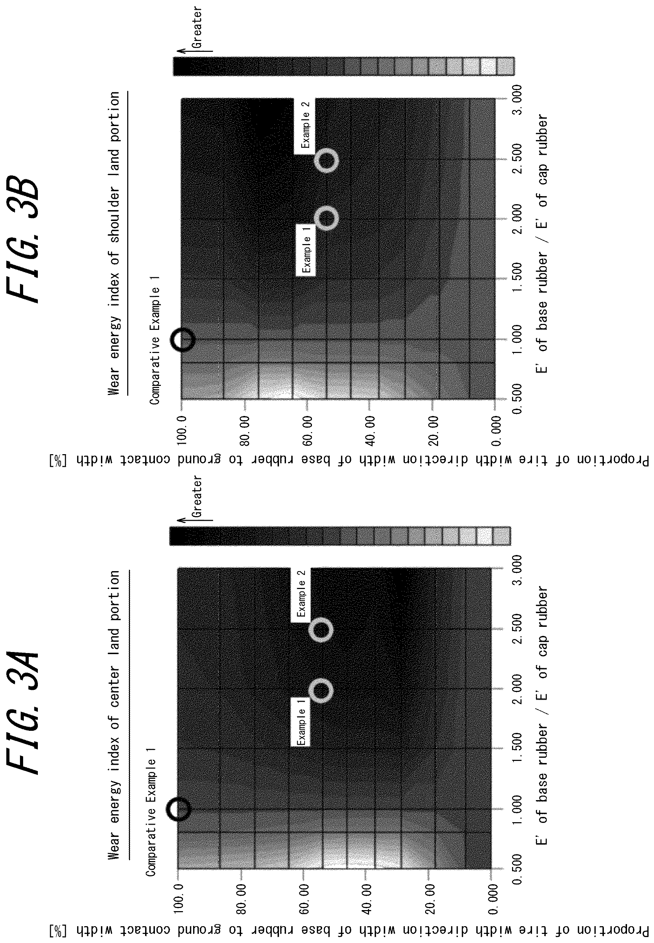

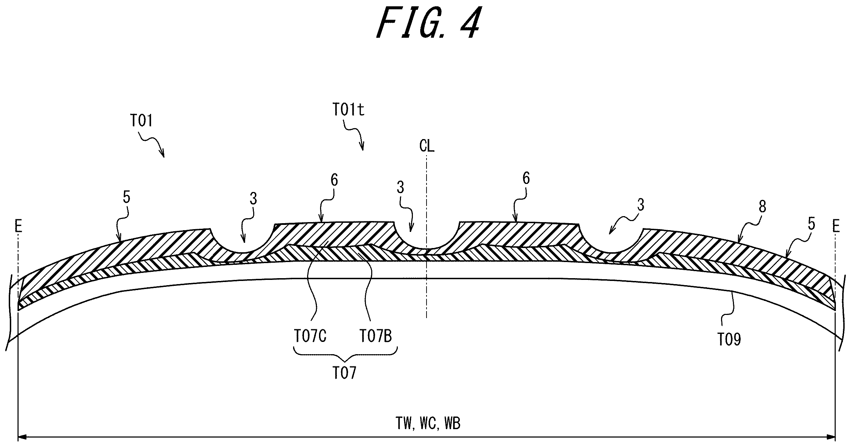

FIG. 3A and FIG. 3B present the results of FEM analysis performed using a model of the tire T01. In this analysis, as parameters of the tire T01 model, the ratio of the storage modulus E' of the base rubber T07B to the storage modulus E' of the cap rubber T07C (storage modulus E' of base rubber T07B / storage modulus E' of cap rubber T07C) (horizontal axis in FIGS. 3A and 3B), and the proportion (%) of the tire widthwise width WB of the base rubber T07B to the ground contact width TW (vertical axis in FIGS. 3A and 3B) were varied, and for each model of the tire T01 with different values of these parameters, the wear energy index generated during rolling of the tire T01 (shading in FIGS. 3A and 3B) was determined. Apart from these parameters, the configuration of the tire T01 model was the same in each example. FIG. 3A presents the wear energy index generated in each center land portion 6, and FIG. 3B presents the wear energy index generated in each shoulder land portion 5. The higher the value of this wear energy index, the better the wear resistance performance. The model of the tire T01 basically had a tread rubber T07 with a configuration as illustrated in FIG. 1 or FIG. 4. Among the models of the tire T01 in each example, three examples-Comparative Example 1, Example 1, and Example 2-are indicated by circles in FIG. 3A and FIG. 3B and are also presented in Table 1. In addition, Table 1 presents the wear energy of each of Comparative Example 1, Example 1, and Example 2 as an index with the wear energy of Comparative Example 1 set to 100. The higher the value of this wear energy index, the better the wear resistance performance.

**[Table 1]**

| | **Comparative Example 1** | **Example 1** | **Example 2** |
|---|---|---|---|
| **Configuration of Tread Rubber T07** | **FIG. 4** | **FIG. 1** | **FIG. 1** |
| **Proportion of Tire Width Direction Width WB of Base Rubber T07B to Ground Contact Width TW (%)** | **100** | **53** | **53** |
| **Storage Modulus E' of Base Rubber T07B / Storage Modulus E' of Cap Rubber T07C** | **1.0** | **2.0** | **2.5** |
| **Wear Energy Index (-)** | **100** | **114** | **117** |

As can be seen from Table 1 and FIG. 3A and FIG. 3B, the tires of each example had a higher wear energy index and, consequently, higher wear resistance performance than the tire of Comparative Example 1.

### INDUSTRIAL APPLICABILITY

The passenger vehicle tire according to the present disclosure can be suitably used for any passenger vehicle pneumatic tire.

### REFERENCE SIGNS LIST

T01: passenger vehicle tire (tire),
3: main groove,
5: shoulder land portion,
6: center land portion,
8: tread surface,
E: ground contact edge,
TW: ground contact width, WC: tire widthwise width of cap rubber, WB: tire widthwise width of base rubber,
GT: gauge of tread rubber, GB: gauge of base rubber,
T01t: tread portion, T01w: sidewall portion, T01b: bead portion,
T02: bead core,
T03: bead filler,
T04: belt reinforcement layer,
T05: carcass, T05p: carcass ply,
T06: belt, T06p: belt ply,
T07: tread rubber, T07C: cap rubber, T07B: base rubber,
T08: side rubber,
T09: inner liner, T11: rubber chafer, T14: wire chafer,
CL: tire equatorial plane,
10: RF tag

## Claims

1. A passenger vehicle tire comprising: tread rubber composed of cap rubber and base rubber, wherein
the cap rubber is positioned on the tire radial direction outer side with respect to the base rubber and is also positioned on both tire width direction outer sides with respect to the base rubber,
the base rubber is composed entirely of rubber having the same composition,
the tire width direction width of the base rubber is shorter than the tire width direction width of the cap rubber,
and the storage modulus E' of the base rubber is at least 2.0 times the storage modulus E' of the cap rubber.

2. The passenger vehicle tire according to claim 1, wherein the storage modulus E' of the base rubber is 2.0 to 2.5 times the storage modulus E' of the cap rubber.

3. The passenger vehicle tire according to claim 1, wherein the tire width direction width of the base rubber is 40 % to 70 % of the ground contact width.

4. The passenger vehicle tire according to claim 1, wherein the tread surface is provided with
a plurality of main grooves, and
one or more center land portions partitioned between the plurality of main grooves,
and wherein, in a tire width direction region corresponding to each of the center land portions located within a tire width direction region corresponding to the base rubber, an average value of a ratio of the gauge of the base rubber to the gauge of the tread rubber is at least 20 %.
